Europäisches Patentamt

European Patent Office

Office européen des brevets

(19)

(11) Veröffentlichungsnummer: **0 218 024 B1**

# EUROPÄISCHE PATENTSCHRIFT

(12)

(45) Veröffentlichungstag der Patentschrift: **24.07.91**

(51) Int. Cl.⁵: **B27K 3/50, B27K 3/40**

(21) Anmeldenummer: **86109910.9**

(22) Anmeldetag: **18.07.86**

(54) Mittel oder Konzentrat zum Konservieren von Holz und Holzwerkstoffen.

(30) Priorität: **31.08.85 DE 3531257**

(43) Veröffentlichungstag der Anmeldung:
**15.04.87 Patentblatt 87/16**

(45) Bekanntmachung des Hinweises auf die
Patenterteilung:
**24.07.91 Patentblatt 91/30**

(84) Benannte Vertragsstaaten:
**AT BE CH DE FR GB IT LI LU NL SE**

(56) Entgegenhaltungen:
EP-A- 0 038 932      EP-A- 0 043 035
EP-A- 0 149 005      DE-A- 3 130 675
FR-A- 2 445 203      GB-A- 2 128 091

(73) Patentinhaber: **DESOWAG Materialschutz
GmbH
Rossstrasse 76 Postfach 32 02 20
W-4000 Düsseldorf 30(DE)**

(72) Erfinder: **Metzner, Wolfgang, Dr.
Buschstrasse 151
W-4150 Krefeld(DE)**
Erfinder: **Hellwig, Volker, Dr.
Thiergartenstrasse 15
W-4150 Krefeld 1(DE)**
Erfinder: **Pospischil, Reiner, Dr.
Im Tiergarten 9
W-5010 Bergheim-Fliesteden(DE)**
Erfinder: **Cymorek, Siegfried, Dr.
Platanenstrasse 17
W-4150 Krefeld-Gartenstadt(DE)**

(74) Vertreter: **Seiler, Siegfried
c/o DEUTSCHE SOLVAY-WERKE GmbH Langhansstrasse 6 Postfach 11 02 70
W-5650 Solingen 11(DE)**

## Beschreibung

Die vorliegende Erfindung betrifft ein Mittel oder Konzentrat zum Konservieren von Holz und Holzwerkstoffen auf der Basis mindestens eines Insektizides oder Insektizidgemisches, mindestens eines Lösungsmittels oder Lösungsmittelgemisches, eines Bindemittels oder Bindemittelgemisches, sowie ggf. eines Fungizides oder Fungizidgemisches, Verarbeitungshilfs- und/oder Zusatzmittels, Farbstoffes, Pigmentes, Farbstoff- oder Pigmentgemisches, wobei das Mittel eine bestimmte Zusammmensetzung spezifischer Insektizide bzw. Insektizidgemische enthält.

Aus der EP-A-0 149 005 ist bereits ein Schädlingsbekämpfungsmittel für Holz, enthaltend ein Insektizid des Typs Permethrin und Teeröl in einem organischen Lösemittel bekannt. Ebenso wird in der FR-A 2 445 203 die Verwendung eines bestimmten Insektizides in Holzschutzmitteln vorgeschlagen.

Ferner beschreibt die EP-A-0 043 035 Holzkonservierungsmittel, bei denen niedrigviskose Alkydharze mit einer ganz bestimmten Viskosität in Kombination mit Fungiziden und/oder Insektiziden eingesetzt werden. Diese Alkydharze beeinträchtigen in diesem Zusammenhang nicht die Insektizidität bzw. Fungizidität der genannten Wirkstoffe.

Die chemischen Verbindungen 2,2-Dimethyl-3-di-chlorvinyl-cis/transcyclopropancarbonsäure-α-cyano-3'-phenoxy-4'-fluoro-benzylester oder Cyano-(4-fluoro-3-phenoxyphenyl)-methyl-3-(2,2-dichloroethenyl)-2,2-dimethylcyclopropancarboxylat (C.A.) sowie ((-)1R-trans-2,2-Dimethyl-3-(2,2-di-chlorvinyl)-cyclopropancarbonsäurepentafluorbenoder (-(Pentafluorphenyl)-methyl))-1R, 3R-3-(2,2-dichlorethenyl)-2,2-dimethylcyclopropancarboxylat (C.A.)) oder enantiomere Verbindungen derselben sind bereits als Insektizide bekannt (vgl. DE-A 27 09 264).

Bei den genannten Verbindungen handelt es sich um Insektizide mit hoher Kontaktinsektizidität. Versucht man die genannten Insektizide als Holzschutzmittel unter Verwendung von Lösungs- oder Verdünnungsmitteln einzusetzen, so ergibt sich beispielsweise bei einer Konzentration von 0,05 Gew.-% bei dem Kontakt der Käferart Sitophilus granarius mit der behandelten Fläche nach 5 Stunden eine Abtötungsquote von 100 %. Da somit auch Nutzinsekten bei den Überläufen der behandelten Flächen bzw. bei dem Kontakt mit der behandelten Fläche getötet werden oder gefährdet werden können, wurde der Einsatz dieser Insektizide zu Holzkonservierungsmitteln bisher vermieden. Darüber hinaus ergibt sich der zusätzliche Nachteil, daß die genannten Insektizide, nämlich ((1R-trans-2,2-Dimethyl-3-(2,2-dichlorvinyl)-cyclopropancarbonsäurepentafluorbenzylester oder ((Pentafluorphenyl)-methyl))-1R, 3R-3-(2,2-di-chlorethephenyl) -2,2-dimethylcyclopropancarboxylat teilweise nach Alterung und/oder Bewitterung eine Wirkungsminderung aufweisen.

Ziel und Aufgabe der vorliegenden Erfindung war es, die vorgenannten Nachteile zu vermeiden und möglichst dauerhaft wirksame Holzkonservierungsmittel (oder Konzentrate derselben) unter Mitverwendung der Insektizide 2,2-Dimethyl-3-dichlorvinyl-cis/ transcyclopropancarbonsäure-α-cyano-3'-phenoxy-4'-fluoro-benzylester oder Cyano-(4-fluoro-3-phenoxyphenyl)-methyl-3-(2,2-di-chloroethenyl)-2,2-dimethylcyclopropancarboxylat (C.A.)) und/oder ((-)1R-trans-2,2-Dimethyl-3-(2,2-di-chlorvinyl)-cyclopropancarbonsäurepentafluorbenzylester oder ((Pentafluorphenyl)-methyl))-1R, 3R-3-(2,2-dichlorethenyl)-2,2-dimethylcyclopropancarboxylat (C.A.)) oder deren Enantiomeren zu finden.

Erfindungsgemäß wurde festgestellt, daß diesen Zielen und Aufgaben ein Mittel oder Konzentrat zum Konservieren von Holz und Holzwerkstoffen auf der Basis mindestens eines Insektizides oder Insektizidgemisches, mindestens eines Lösungsmittels oder Lösungsmittelgemisches, eines Bindemittels oder Bindemittelgemisches sowie ggf. eines Fungizids, Verarbeitungshilfs- und/oder Zusatzmittels, Farbstoffes, Pigmentes, Farbstoff- oder Pigmentgemisches gerecht wird, das 0,001 - 5 Gew.-% 2,2-Dimethyl-3-dichlorvinyl-cis/transcyclopropancarbonsäure-α-cyano-3'-phenoxy-4'-fluoro-benzylester oder bezeichnet als Cyano-(4-fluoro-3-phenoxyphenyl)-methyl-3-(2,2-dichloroethenyl)-2,2-dimethylcyclopropancarboxylat (C. A.) und/oder (-)1R-trans-2,2-Dimethyl-3-(2,2-di-chlorvinyl)-cyclopropancarbonsäurepentafluorbenzylester oder bezeichnet als ((Pentafluorphenyl)-methyl))-1R, 3R-3-(2,2-dichlorethenyl)-2,2-dimethylcyclopropancarboxylat (C.A.) oder eines deren Enantiomere und mehr als 75 Gew.-%, vorzugsweise mehr als 90 Gew.-%, eines Gemisches bestehend aus mindestens einem Bindemittel und mindestens einem Verdünnungsmittel und/oder mindestens einem Emulgator und/oder Netzmittel oder -Gemisch derselben, enthält, mit der Maßgabe, daß das Bindemittel in dem Holzschutzmittel oder Konzentrat (berechnet als Feststoff) mindestens 1 Gew.-%, vorzugsweise mehr als 4 Gew.-%, beträgt.

Weiterhin beträgt dabei das Gewichtsverhältnis von Bindemittel oder Bindemittelgemisch zu dem Verdünnungsmittel oder Verdünnungsmittelgemisch (einschließlich der im Verdünnungsmittel oder Verdünnungsmittelgemisch enthalten Bestandteile wie Lösungsmittel und/oder Wasser und dem im Mittel oder Konzentrat enthalten Emulgator oder Emulgatorgemisch und/oder Netzmittel oder Netzmittelgemisch) 8,5 : 1 bis 1 : 99.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend Acrylatharz, ein Vinylharz, z.B. Polyvinylacetat, Polyesterharz, Polykondensations- oder Polyadditionsharz, Polyurethanharz, Alkydharz, Siliconharz, trocknende pflanzliche und/oder trocknende Öle und/oder physikalisch trocknende Bindemittel auf der Basis eines Natur- und/oder Kunstharzes verwendet.

Als Bindemittel wird in einer besonders zweckmäßigen Ausführungsform Kunstharz in Form einer Emulsion, Dispersion oder Lösung, vorzugsweise Alkydharz bzw. modifizierte Alkydharze oder Phenolharz und/oder Kohlenwasserstoffharze, vorzugsweise Inden-Cumaronharze, verwendet. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemisches Bindemittel mindestens ein Alkydharz und/oder ein trocknendes pflanzliches Öl im Mittel oder Konzentrat enthalten. Bevorzugt werden gemäß der Erfindung Alkydharze mit einem Ölgehalt von mehr als 45 Gew.-%, vorzugsweise 50 - 65 Gew.-%, verwendet.

Das Verdünnungsmittel enthält ein organisch-chemisches Lösungsmittel oder Lösungsmittelgemisch, vorzugsweise ein öliges oder ölartiges schwerflüchtiges organisch-chemisches Lösungsmittel oder Lösungsmittelgemisch oder ein Gemisch aus Wasser und/oder mindestens einem organisch-chemischen Lösungsmittel, vorzugsweise mindestens einem öligen oder ölartigen, schwerflüchtigen, organisch-chemischen Lösungsmittel oder Lösungsmittelgemisch und mindestens einem Emulgator und/oder Netzmittel, oder besteht daraus.

Nach einer Ausführungsform ist das organisch-chemische Bindemittel oder Bindemittelgemisch ganz, vorzugsweise teilweise durch mindestens ein Fixierungsmittel oder mindestens einen Weichmacher ersetzt.

Dabei ist das organisch-chemische Bindemittel oder Bindemittelgemisch von 0 bis zu 75 Gew.-%, vorzugsweise von 0,01 bis zu 35 Gew.-%, (bezogen auf 100 Gew.-% eingesetzes Bindemittel, berechnet als Feststoff) durch die gleichen Gewichtsmengen mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine Kristallisation bzw. Ausfällung verhindern sollen. Vorzugsweise werden

a) Weichmacher, z.B. Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z.B. Alkylstearate oder Alkyloleate, vorzugsweise Butyloleat, Butylstearat oder Amylstearat, Bis-(dimethylbenzyl)-äther, p-Toluolsulfonsäureäthylester, Glycinester, Glycinäther oder höhermolekulare Glykoläther und/oder

b) Fixierungsmittel auf der Basis von Ketonen und/oder Polyvinylalkyläthern, z.B. Ketone mit Alkyl-, Aryl- oder Aralkylgruppen, vorzugsweise Benzophenon, Äthylbenzophenon; Polyvinylalkyläther, vorzugsweise Polyvinylmethyläther, verwendet.

Als organische Lösungsmittel werden vorzugsweise polare organisch-chemische Lösungsmittel und/oder schwerflüchtige ölige oder ölartige Lösungsmittel mit einer Verdunstungszahl über 35 und einem Flammpunkt oberhalb 30 °C, vorzugsweise oberhalb 45 °C, eingesetzt. Als derartige schwerflüchtige wasserunlösliche, ölige oder ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol usw., verwendet. Nach einer vorzugsweisen Ausführungsform werden Tetramethylbenzole, insbesondere aromatische Lösungsmittelgemische mit mehr als 60 Gew.-%, vorzugsweise mehr als 75 Gew.-%, Tetramethylbenzol eingesetzt.

Vorzugsweise gelangen Mineralöle mit einem Siedebereich von 170 - 220 °C, Testbenzin mit einem Siedebereich von 170 -220 °C, Spindelöl mit einem Siedebereich von 250 - 350 °C, Petroleum bzw. Aromaten vom Siedebereich 160 - 280 °C, Terpentinöl und dergleichen zum Einsatz.

In einer Ausführungsform wurden auch flüssige aliphatische Kohlenwasserstoffe mit einem Siedebereich von 180 - 210 °C oder hochsiedende Gemische von aromatischen und aliphatischen Kohlenwasserstoffen mit einem Siedebereich von 180 bis ca. 220 °C und/oder Spindelöl und/oder Monochlornaphthalin, vorzugsweise α-Monochlornaphthalin, verwendet.

Die organischen schwerflüchtigen öligen oder ölartigen Lösungsmittel mit einer Verdunstungszahl über 35 und einem Flammpunkt oberhalb 30 °C, vorzugsweise oberhalb 45 °C, können teilweise durch leicht- oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30 °C, vorzugsweise oberhalb 45 °C, aufweist und daß das Insektizid-Fungizid-Gemisch in diesem Lösungsmittelgemisch löslich oder emulgierbar ist.

Als polare organisch-chemische Lösungsmittel oder Lösungsmittelgemische werden bevorzugt Hydroxy- und/oder Äthergruppen und/oder Ketogruppen und/oder Estergruppen enthaltende Lösungsmittel oder Lösungsmittelgemische eingesetzt. Vorzugsweise gelangen Glycoläther, Diacetonalkohol, wasserlösliche Polyole und deren Ester zum Einsatz.

Nach einer bevorzugten Ausführungsform enthält das anwendungsfertige Mittel zum Konservieren von Holz und Holzwerkstoffen 0,001 - 1 Gew.-%, vorzugsweise 0,005 - 0,2 Gew.-%, Cyano-(4-fluoro-3-phenoxyphenyl)-methyl-3-(2,2-dichloroehtenyl)-2,2-dimethylcyclopropancarboxylat und/oder (Pentafluorphenyl)-methyl))-1R, 3R-3-(2,2-di-chlorethenyl)-2,2-dimethylcyclopropancarboxylat oder enantiomere Verbindungen desselben und 1 - 40 Gew.-%, vorzugsweise 4 - 33 Gew.-% (berechnet als Feststoff), mindestens eines organisch-chemischen Bindemittels und/oder Fixierungsmittels oder Weichmachers. Das Gewichtsverhältnis des Gesamtanteiles an organisch-chemischen Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel) beträgt 1 : 1,2 bis 1 : 99, vorzugsweise 1 : 2 bis 1 : 25.

Das anwendungsfertige Mittel besteht aus 0,001 - 1 Gew.-%, vorzugsweise 0,005 - 0,2 Gew.-%, Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-di-chlorethenyl)-2,2-di-methylcyclopropancarboxylat oder enantiomeren Verbindungen desselben und 1 - 40 Gew.-%, vorzugsweise 4 - 33 Gew.-%, mindestens eines organisch-chemischen Bindemittels und/oder Fixierungsmittels oder Weichmachers, 0 - 7 Gew.-%, vorzugsweise 0,5 - 5 Gew.-%, eines in dem organisch-chemischen Lösungsmittel oder Lösungsmittelgemisch löslichen Fungizides oder -Fungizidgemisches, 0 - 8 Gew.-%, vorzugsweise 0,1 - 4 Gew.-%, mindestens eines wasserlöslichen und/oder wasserunlöslichen Farbstoffes, Farbpigmentes und/oder Korrosionsschutzmittels, Siccatives und/oder UV-Stabilisators und 98,999 Gew.-% - 44 Gew.-%, vorzugsweise 95,395 Gew.-% - 57,8 Gew.-%, eines Verdünnungsmittels oder Verdünnungsmittelgemisches, bestehend aus mindestens einem organisch-chemischen Lösungsmittel oder Lösungsmittelgemisch und/oder Wasser und/oder mindestens einem Emulgator und/oder Netzmittel oder -Gemisch derselben.

Das erfindungsgemäße Konzentrat zum Konservieren von Holz und Holzwerkstoffen enthält 0,002 - 5 Gew.-%, vorzugsweise 0,003 - 2 Gew.-%, Cyano-(4-fluoro-3-phenoxyphenyl)-methyl-3-(2,2-dichloroethenyl)-2,2-dimethylcyclopropancarboxylat und/oder ((Pentafluorphenyl)-methyl))-1R, 3R-3-(2,2-di-chlorethenyl)-2,2-dimethylcyclopropancarboxylat oder enantiomere Verbindungen desselben und 2 - 85 Gew.-%, vorzugsweise 8 -40 Gew.-% (berechnet als Feststoff), mindestens eines organisch-chemischen Bindemittels und/oder Fixierungsmittels oder Weichmachers, wobei das Gewichtsverhältnis des Gesamtanteiles an organisch-chemischen Bindemittel und/oder - Fixierungsmittel oder Weichmacher zu dem Gesamtanteil des Verdünnungsmittels (einschließlich Lösungsmittel oder Lösungsmittelgemisch und/oder Wasser und/oder Emulgator und/oder Netzmittel) 8,5 : 1 bis 1 : 48, vorzugsweise 1 : 1,45 bis 1 : 11,5, beträgt.

Das Konzentrat enthält 0,002 - 5 Gew.-%, vorzugsweise 0,003 - 2 Gew.-%, Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-di-chlorethenyl)-2,2-dimethylcyclopropancarboxylat oder enantiomere Verbindungen desselben und 2 - 85 Gew.-%, vorzugsweise 8 - 60 Gew.-%, mindestens eines organisch-chemischen Bindemittels und/oder Fixierungsmittels oder Weichmachers, 20 - 0 Gew.-%, vorzugsweise 8 - 1 Gew.-%, eines in dem organisch-chemischen Lösungsmittel oder Lösungsmittelgemisch löslichen Fungizides oder Fungizidgemisches und einem Verdünnungsmittel oder Verdünnungsmittelgemisch als Restbestandteil, bestehend aus mindestens einem organisch-chemischen Lösungsmittel oder Lösungsmittelgemisch oder Wasser und organisch-chemisches Lösungsmittel oder Lösungsmittelgemisch und/oder mindestens einem Emulgator und/oder Netzmittel oder einem -Gemisch derselben sowie gegebenenfalls Farbstoffen, Farbpigmenten, Korrosionsschutzmittel, Siccativen und/oder UV-Stabilisatoren.

Das Konzentrat enthält nach einer bevorzugten Ausführungsform als Emulgator oder Emulgatorgemisch mindestens ein eine Seitengruppe enthaltendes äthoxyliertes Phenol, vorzugsweise ein äthoxyliertes (10)-Nonylphenol und/oder eine äthoxylierte Fettsäure und/oder Polyalkylenglykoläther. Die Emulgatoren können auch mit Netzmitteln kombiniert werden, z. B. mit Netzmitteln auf der Basis organischer Phosphoraminverbindungen.

Das Konzentrat und das daraus hergestellte Mittel zum Konservieren von Holz und Holzwerkstoffen enthält nach einer Ausführungsform ein Gemisch von Emulgatoren mit unterschiedlicher Kettenlänge, von denen mindestens ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Nach einer besonders vorteilhaften Ausführungsform enthält das Konzentrat als wasserverdünnbares Kunstharz ein Alkydharz, das eine mittlere Öllänge besitzt. Durch die Verwendung dieses Kunstharzes wird trotz des geringen Anteiles des organisch-chemischen Lösungsmittels, z.B. auf Erdölbasis, erreicht, daß einerseits eine bessere Fixierung der Wirkstoffe erzielt und andererseits je nach Kunstharzanteil eine Filmbildung ermöglicht wird.

Nach einer Ausführungsform enthält das Konzentrat als Puffermaterial oder pH-Wert-Regler zur Herstellung eines pH-Wertes von 7 bis 10 eine oder mehrere alkalisch wirkende Verbindungen.

Das bevorzugt eingesetzte nichtionische organisch-chemische wasserunlösliche Fungizid bzw. wasserunlösliche Fungizidgemisch besteht bevorzugt aus einer tetravalenten zinnorganischen Verbindung oder einer(N-Cyclohexyldiazeniumdioxy)-metallverbindung (bzw. Salz des N-Nitroso-N-cyclohexylhydroxylamins), vorzugsweise deren Aluminiumverbindung, Pentachlorphenol, 2,5-Dimethyl-N-cyclohexyl-N-methoxy-3-furan-carbonsäureamid und/oder N,N-Dimethyl-N'-(fluordichlormethylthio)-sulfamid und/oder N,N-Dimethyl-N'-p-tolyl-N'-(dichlorfluormethylthio)-sulfamid,oder aus zwei oder mehreren dieser Verbindungen.

Als öllösliche tetravalente, fungizide zinnorganische Verbindungen können beispielsweise eingesetzt werden: Tributylzinnbenzoat, Tributylzinnoleat, Tris (tributylzinn)phosphat, Bis-(tri-butylzinn)-oxid, Tributylzinnnaphthenat, Tributylzinnoctoat.

Nach einer Ausführungsform können die nichtionischen Fungizide ganz oder teilweise auch ionische Fungizide, vorzugsweise quarternäre fungizide Ammoniumverbindungen der Kaliumsalze des N-Nitroso-N-cyclohexylhydroxylamins ersetzt werden. Als quaternäre fungizide Ammoniumverbindungen werden Dialkyl($C_{10}$ - $C_{18}$)Alkyl ($C_1$ -$C_5$)-Benzylammoniumhalogenide und/oder Alkyl($C_{10}$ - $C_{18}$)Dialkyl($C_1$ - $C_5$)Benzylammoniumhalogenide eingesetzt.

Insbesondere zur Herstellung von Emulsionskonzentraten oder wasserhaltigen Holzschutzmitteln werden die organisch-chemischen Lösungsmittel nach einer bevorzugten Ausführungsform mit Lösungsmitteln, vorzugsweise Hydroxyl- oder Äthergruppen enthaltenden Lösungsmitteln oder Lösungsvermittlern, vermischt.

Als organisch-chemische polare Lösungsmittel werden Hydroxylgruppen und/oder Äthergruppen und/oder Ketogruppen enthaltende organisch-chemische Lösungsmittel verwendet.

Als Hydroxylgruppen und/oder Äthergruppen und/oder Ketogruppen enthaltende organisch-chemische Lösungsmittel werden vorzugsweise Äthylenglykol (2-Hydroxy-äthanol),Diäthylenglykol (2,2-Dihydroxy-diäthyläther), Äthylglykol (2-Hydroxy-diäthyläther), Butyl-glykol (1-Hydroxy-2-n-butoxyäthan) und/oder Äthyldi-glykol (2-Hydroxy-2-äthoxydiäthyläther) und/oder Diacetonalkohol eingesetzt.

Für bestimmte Rezepturen kann es zweckmäßig sein, Antischaummittel wie Siliconentschäumer oder Alkylphosphate, vorzugsweise n-Butylphosphat, zuzusetzen. Weiterhin können Farbstoffe oder andere Zusatzmittel, z. B. UV-Stabilisatoren, Verdickungsmittel, Sikkative, Korrosionsschutzmittel und dgl. zugefügt werden, je nach der gewünschten Eigenschaft des Mittels. Als Sikkative (Trockenstoffe), die vorzugsweise in Kombination mit einem Bindemittel auf der Basis eines pflanzlichen Öles eingesetzt werden, gelangen vorzugsweise Kobalt-, Zink-, Cer- und/oder Manganoctoat und/oder -naphthenat zur Verwendung.

Als Rückverdünnungsmittel zur Herstellung von anwendungsfertigen Mitteln aus Konzentraten werden die vorgenannten Verdünnungsmittel oder Verdünnungsmittelgemische, gegebenenfalls in Kombination mit Bindemitteln, Zusatzstoffen, Verarbeitungshilfsmitteln, Farbstoffen, Farbpigmenten, UV-Stabilisatoren, Korrosionsinhibitoren und dgl., eingesetzt.

Das Holzkonservierungsmittel kann nach den an sich bekannten Verfahren auf das Holz aufgebracht werden, vorzugsweise durch Streichen, Spritzen, Sprühen oder unter Verwendung von Imprägnierverfahren, beispielsweise Tauch-, Druck- und/oder Vakuumverfahren.

Es wind weiterhin ein Verfahren zur Herstellung des Holzschutzmittelkonzentrates und der daraus hergestellten Mittel zum Konservieren von Holz und Holzwerkstoffen bekannt gegeben. Nach diesem Verfahren wird das im organisch-chemischen Lösungsmittel oder Lösungsmittelgemisch lösliche Insektizid und/oder Fungizid und der nichtionogene Emulgator oder das nichtionogene Emulgatorgemisch bei Temperaturen von 10 bis 80 °C, vorzugsweise 30 bis 60 °C, und bei Drücken von 400 mg Hg bis 850 mm Hg (0,5332 bis 1,1332 bar bzw. 533,2 bis 1133,2 Hektopascal), vorzugsweise 600 mm Hg bis 790 mm Hg (0,7999 bis 1,0532 bar bzw. 799,9 bis 1053,2 Hektopascal), in Anwesenheit oder in Abwesenheit der übrigen Stoffe oder Bestandteile dieser Stoffe solange behandelt, bis eine Lösung entsteht, wobei der Lösung nachfolgend die übrigen Stoffe sowie gegebenenfalls Wasser zugefügt werden.

Als Emulgatoren oder Tenside werden die an sich bekannten Emulgatoren oder Tenside eingesetzt.

Das Tensid oder Tensidgemisch besteht z.B. aus Isopropylamin-dodecylbenzylsulfonat,Polyoxyethylen-Sorbitan- und/oder Sorbitol-Oleat-Laurat, Polyoxyethylen(30)-Nonylphenol und/oder Polyalkylglykoläther oder -ester und/oder Isopropylamin-dodecylbenzylsulfonat und/oder Ca-Alkylarylsulfonat.

Das Tensid oder Tensidgemisch enthält bevorzugt mindestens ein Alkylarylsulfonat, ein Derivat der Alkylarylsulfonsäure und/oder ein Polyoxyethylenderivat und/oder ein Polyalkylen- oder Polyalkylglykoläther oder -ester, und/oder eine oder mehrere Polyoxyethylengruppen und/ oder ein oder mehrere Fettsäuregruppen enthaltende oberflächenaktive organisch-chemische Verbindungen.

Beispiele

Beispiel 1

Imprägnierungsanstrichmittel (ölig mit insektiziden/termitiziden und fungiziden Eigenschaften)

0,15 Gew.-%
Cyano-(4-fluoro-3-phenoxyphenyl)-methyl-3-(2,2-dichloroethenyl)-2,2-dimethylcyclopropancarboxylat (Cyfluthrin)
0,60 Gew.-%
N,N-Dimethyl-N'(fluordichlormethylthio)-sulfamid
2,00 Gew.-%
2,5-Dimethyl-N-cyclohexyl-N-methoxy-3-furan-carbonsäureamid
5,00 Gew.-%
Alkydharz (berechnet als Feststoff, Säurezahl 9,Ölgehalt 65 %, Viskosität: 3500 mpa s 60-%ig in Testbenzin 60)
92,25 Gew.-%
aliphatische und aromatische Lösungsmittel, vorzugsweise zu mehr als 60 Gew.-% (bezogen auf 100 Gew.-% Lösungsmittelgemisch) Tetramethylbenzol(e) und weniger als 40 Gew.-% alipatisches Lösungsmittel (180 - 210 °C Siedebreich, 59 °C Flammpunkt, 7,6 Löslichkeitsparameter)

Beispiel 2

Konzentrat (z.B. für anwendungsfertige Imprägnierungsmittel nach Beispiel 1)

0,60 Gew.-%
Cyano-(4-fluoro-3-phenoxyphenyl)-methyl-3-(2,2-dichloroethenyl)-2,2-dimethylcyclopropancarboxylat (Cyfluthrin)
2,40 Gew.-%
N,N-Dimethyl-N'(fluordichlormethyl-thio)-sulfamid
8,00 Gew.-%
2,5-Dimethyl-N-cyclohexyl-N-methoxy-3-furan-carbonsäureamid
20,00 Gew.-%
Alkydharz (berechnet als Feststoff) (Säurezahl 9, Ölgehalt 65 %, Viskosität: 3500 mpa s 60-%ig in Testbenzin 60)
69,00 Gew.-%
aromatische Lösungsmittel, mit einem überwiegenden Anteil von Tetramethylbenzol(en)

Beispiel 3

Imprägnierung (wässrig mit insektiziden/termitiziden und fungiziden Eigenschaften)

0,15 Gew.-%
Cyano-(4-fluoro-3-phenoxyphenyl)-methyl-3-(2,2-dichloroethenyl)-2,2-dimethylcyclopropancarboxylat (Cyfluthrin)
1,00 Gew.-%
2,5-Dimethyl-N-cyclohexyl-N-methoxy-3-furan-carbonsäureamid
2,40 Gew.-%
Alkydharz (berechnet als Feststoff, Ölgehalt 50 %, Säurezahl 48 %, Viskosität 2300 mpa S - 70 % in Butylglykol)
3,00 Gew.-%
Emulgatorgemisch bestehend aus äthoxyliertes (10)-Nonylphenol, Polyalkylenglykoläther)
1,45 Gew.-%
aliphatische und aromatische Lösungsmittel
2,00 Gew.-%
Butylglykol
90,00 Gew.-%
Wasser

Beispiel 4

Konzentrat für wässrige Imprägnierung

1,50 Gew.-%
Cyano-(4-fluoro-3-phenoxyphenyl)-methyl-3-(2,2-dichloroethenyl)-2,2-dimethylcyclopropancarboxylat (Cyfluthrin)
10,00 Gew.-%
2,5-Dimethyl-N-cyclohexyl-N-methoxy-3-furan-carbonsäureamid
14,50 Gew.-%
aromatische und aliphatische Lösungsmittel, vorzugsweise Gemisch von Testbenzin (180 - 210 °C Siedebreich, 59 °C Flammpunkt, 7,6 Löslichkeitsparameter) und/oder Gemisch von Tetramethylbenzol (180 - 210 °C Siedebereich, 59 °C Flammpunkt, 7,6 Löslichkeitsparameter)
24,00 Gew.-%

Alkydharz (berechnet als Feststoff)
20,00 Gew.-%
Butylglykol
30,00 Gew.-%
Emulgator, vorzugsweise äthoxyliertes (10)-Nonylphenol

Beispiel 5

Pigmentierte Holzschutzlasur (ölig mit
insektiziden/termitiziden und fungiziden Eigenschaften)

0,15 Gew.-%
Pentafluorphenyl)-methyl)-1R,3R-3-(2,2-di-
chlorethenyl)-2,2-dimethylcyclopropancarboxylat
(Fenfluthrin)
0,60 Gew.-%
N,N-Dimethyl-N'(flourdichlormethylthio)-sulfamid
2,00 Gew.-%
2,5-Dimethyl-N-cyclohexyl-N-methoxy-3-furan-
carbonsäureamid
20,00 Gew.-%
Alkydharz (berechnet als Feststoff, Säurezahl 9,
Ölgehalt 65 %, Viskosität: 3500 mpa s 60-%ig in
Testbenzin 60)
2,00 Gew.-%
Eisenoxid-Gelbpigment
0,30 Gew.-%
Eisenoxid-Rotpigment
0,20 Gew.-%
Netzmittelgemisch, vorzugsweise unter Mitverwendung oder bestehend aus organischen
Phosphoraminverbindungen
0,10 Gew.-%
Trockenstoff (Cobaltoctoat)
0,50 Gew.-%
Verdickungsmittel (Montmorillonit)
74,15 Gew.-%
aliphatische und aromatische Lösungsmittel,
vorzugsweise zu mehr als 60 Gew.-% (bezogen
auf 100 Gew.-% Lösungsmittelgemisch)
Tetramethylben-zol(e) und weniger als 40 Gew.-
% alipatisches Lösungsmittel (180 - 210 C Siedebreich, 59 °C Flammpunkt, 7,6 Löslichkeitsparameter)

Beispiel 6

Holzschutzgrundierung

0,1 Gew.-%    Cyano-(4-fluoro-3-
              phenoxyphenyl)-methyl-3-(2,2-
              dichloroethenyl)-2,2-
              dimethylcyclopropancarboxylat
10,0 Gew.-%   Alkydharz (berechnet als Feststoff, Säurezahl 9, Ölgehalt 65
              %, Viskosität: 3500 mpa s 60-%ig in Testbenzin 60)
0,1 Gew.-%    Siccative
89,8 Gew.-%   aromatisches organisch-chemi-
              sches wasserunlöslichen Lö-
              sungsmittelgemisch

Beispiel 7

0,1 Gew.-%
Cyano-(4-fluoro-3-phenoxyphenyl)-methyl-3-(2,2-
dichloroethenyl)-2,2-dimethyl-
cyclopropancarboxylat (Cyfluthrin)
0,05 Gew.-%
Pentafluorphenyl)-methyl)-1R,3R-3-2,2-di-
chlorethenyl)-2,2-dimethylcyclopropancarboxylat
(Fenfluthrin)
0,60 Gew.-%
N,N-Dimethyl-N'(fluordichlormethylthio)-sulfamid
2,00 Gew.-%
2,5-Dimethyl-N-cyclohexyl-N-methoxy-3-furan-
carbonsäureamid
20,00 Gew.-%
Alkydharz (berechnet als Feststoff, Säurezahl 9,
Ölgehalt 65 %, Viskosität: 3500 mpa s 60-%ig in
Testbenzin 60)
2,00 Gew.-%
Eisenoxid-Gelbpigment
0,30 Gew.-%
Eisenoxid-Rotpigment
0,20 Gew.-%
Netzmittelgemisch, vorzugsweise unter Mitverwendung oder bestehend aus organischen
Phosphoraminverbindungen
0,10 Gew.-%
Trockenstoff (Cobaltactoat)
0,50 Gew.-%
Verdickungsmittel (Montmorillonit)
74,15 Gew.-%
aliphatische und aromatische Lösungsmittel,
vorzugsweise zu mehr als 60 Gew.-% (bezogen
auf 100 Gew.-% Lösungsmittelgemisch)
Tetramethylbenzol(e) und weniger als 40 Gew.-
% aliphatisches Lösungsmittel (180 - 210 °C
Siedebereich, 59 °C Flammpunkt, 7,6 Löslichkeitsparameter)

Vergleichsversuch:

Zur Feststellung des Einflusses des Bindemittelgehaltes bei Holzkonservierungsmitteln unter
Verwendung von Cyano-(4-fluoro-3-phenoxyphenyl)-methyl-3-(2,2-dichloroethenyl)-2,2-
dimethylcyclopropancarboxylat wurde der nachfolgende Vergleichsversuch durchgeführt. Durch den
Versuch soll dargestellt werden, daß Nutzarthropoden durch das erfindungsgemäße Holzschutzmittel
geschont werden, während bei holzschützender Imprägnierung nur unter Verwendung von aromatischen Lösungsmitteln (z.B. Toluol) eine Abtötung der Nutzinsekten erfolgte. Cyano(4-fluoro-3-phenoxyphenyl)-methyl-3-(2,2-dichloroethenyl)-2,2-dimethylcyclopropancarboxylat wurde bei den Vergleichsversuchen 1 und 2 in einer 0,1 %igen Konzentration eingesetzt, wobei folgende Zusammensetzung dem Vergleichsversuch zugrunde gelegt wurde:

1. Cyano-(4-fluoro-3-phenoxyphenyl)-methyl-3-(2,2-dichloroethenyl)-2,2-dimethylcyclopropancarboxylat in einer 0,1 %igen Konzentration in Toluol (ohne Bindemittel) - s. grafische Darstellung Versuch Nr. 1.

2. Ein Holzschutzmittel gemäß Beispiel 6 mit einer 0,1 %igen Konzentration von Cyano-(4-fluoro-3-phenoxyphenyl)-methyl-3-(2,2-dichloroethenyl)-2,2-dimethylcyclopropancarboxylat - s. graf. Darstellung Versuch Nr. 2.

3. Ein Vergleich mit unbehandelten Kontrollproben (graf. Darstellung Versuch Nr. 3) s. beigefügte Darstellungen der Versuche 1 - 3.

Als Versuchstier wurde die Laufkäferart (Carabidae) Trechus quadristriatus (Schrk.) gewählt, eine Spezies, die zu den häufigsten Laufkäferarten Mitteleuropas zählt und im Pflanzenschutz bereits Eingang in die ökologischen Prüfungen gefunden hat.

Auf Probehölzern, die mit 0,1 % Cyano-(4-fluoro-3-phenoxyphenyl)-methyl-3-(2,2-dichloroethenyl)2,2-dimethylcyclopropancarboxylat in Toluol behandelt waren, wurden die Versuchstiere bereits in weniger als 3 Stunden abgetötet (Versuch Nr. 1).

Bei einer Grundierung des Holzes mit einem Holzkonservierungsmittel gemäß Beispiel 6 (Versuch Nr. 2) übte der Wirkstoff Cyano-(4-fluoro-3-phenoxyphenyl)-methyl-3-(2,2-dichloroethenyl)-2,2-dimethylcyclopropancarboxylat praktisch keinen Einfluß auf die Versuchstiere aus. In der erfindungsgemäßen Formulierung des Holzschutzmittels werden somit Nutzinsekten (z.B. Artropoden) geschont, die die behandelte Oberfläche berühren, sie aber nicht benagen.

In den grafischen Darstellungen (Versuche Nr. 1 - 3) sind unter a und b je zwei Versuchsansätze wiedergegeben.

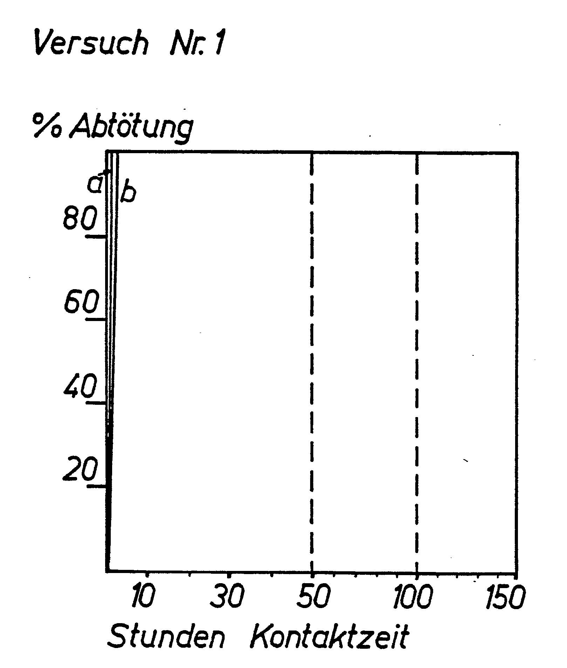

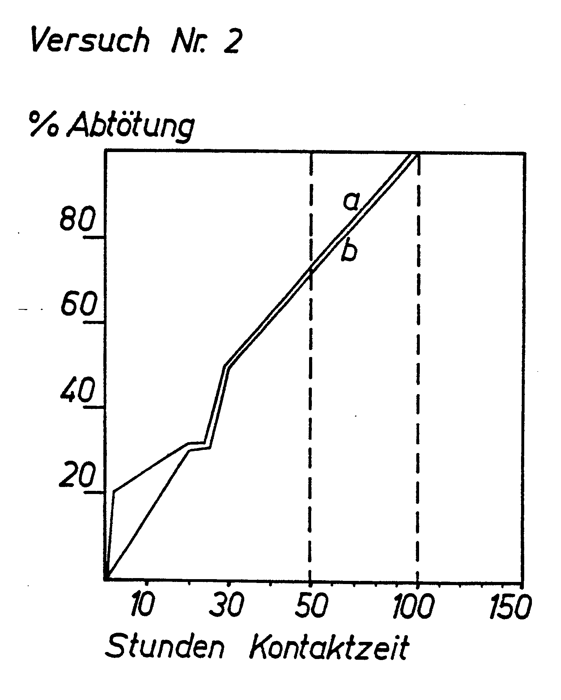

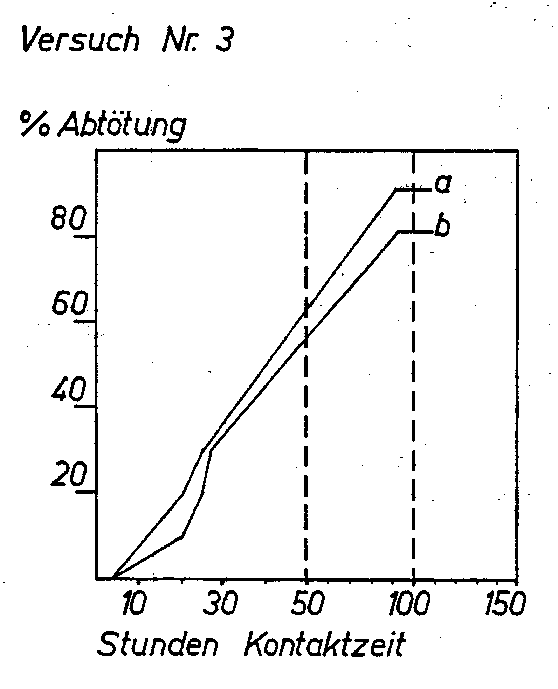

**Patentansprüche**

1. Mittel oder Konzentrat zum Konservieren von Holz und Holzwerkstoffen auf der Basis mindestens eines Insektizides oder Insektizidgemisches, mindestens eines Verdünnungsmittels, mindestens eines organisch-chemischen Bindemittels und/oder Fixierungsmittels sowie ggf. mindestens eines Fungizides, Verarbeitungshilfs- und/oder Zusatzmittels, Farbstoffes, Pigmentes, Farbstoff- oder Pigmentgemisches, dadurch gekennzeichnet, daß das Mittel oder Konzentrat

0,001 - 5 Gew.-%

Cyano-(4-fluoro-3-phenoxyphenyl)-methyl-3-3-(2,2-di-chloroethenyl)-2,2-dimethylcyclopropancarboxylat und/oder (-(Pentafluorphenyl)-methyl))- 1R, 3R-3-2,2-di-chlorethenyl)-2,2-dimethylcyclopropancarboxylat oder enantiomere Verbindungen desselben und

mehr als 75 Gew.-%,

eines Gemisches, bestehend aus mindestens einem Bindemittel und mindestens einem Verdünnungsmittel und/oder mindestens einem Emulgator und/oder Netzmittel oder -Gemisch derselben, enthält, mit der Maßgabe, daß das Bindemittel, das aus mindestens einem Alkydharz und/oder einem trocknenden pflanzlichen Öl besteht, in dem Holzschutzmittel oder Konzentrat (berechnet als Feststoff) mindestens zu 1 Gew.-% enthalten ist und das Gewichtsverhältnis von Bindemittel oder Bindemittelgemisch zu dem Verdünnungsmittel oder Verdünnungsmittelgemisch und zu dem im Mittel oder Konzentrat enthaltenden Emulgator oder Emulgatorgemisch und/oder Netzmittel oder Netzmittelgemisch

8,5 : 1 bis 1 : 99,

beträgt.

2. Mittel oder Konzentrat nach Anspruch 1, dadurch gekennzeichnet, daß das Mittel oder Konzentrat

mehr als 90 Gew.-%

eines Gemisches, bestehend aus mindestens einem Bindemittel und mindestens einem Verdünnungsmittel und/oder mindestens einem Emulgator und/oder Netzmittel oder -Gemisch derselben, enthält, mit der Maßgabe, daß das Bindemittel, das aus mindestens einem Alkydharz und/oder einem trocknenden pflanzlichen Öl besteht, in dem Holzschutzmittel oder Konzentrat (berechnet als Feststoff) mindestens zu 4 Gew.-% enthalten ist.

3. Mittel oder Konzentrat nach Ansprüchen 1 und 2, dadurch gekennzeichnet, daß das Verdünnungsmittel ein organisch-chemisches Lösungsmittel oder Lösungsmittelgemisch, vorzugsweise mindestens ein polares, organisch-chemisches Lösungsmittel und/oder ein öliges oder ölartiges schwerflüchtiges organisch-chemisches Lösungsmittel oder ein Gemisch aus Wasser und/oder mindestens einem organisch-chemischen Lösungsmittel, vorzugsweise mindestens einem polaren organisch-chemischen Lösungsmittel und/oder einem öligen oder ölartigen, schwerflüchtigen, organisch-chemischen Lösungsmittel oder Lösungsmittelgemisch, und mindestens einem Emulgator und/oder Netzmittel, enthält oder daraus besteht.

4. Mittel oder Konzentrat nach einem oder mehreren der Ansprüche 1 - 3, dadurch gekennzeichnet, daß das organisch-chemische Bindemittel oder Bindemittelgemisch ganz, vorzugsweise teilweise durch mindestens ein Fixierungsmittel oder mindestens einen Weichmacher ersetzt ist.

5. Mittel oder Konzentrat nach einem oder mehreren der Ansprüche 1 - 4, dadurch gekennzeichnet, daß das organisch-chemische Bindemittel oder Bindemittelgemisch

von 0 bis zu 75 Gew.-%, vorzugsweise von 0,01 bis zu 35 Gew.-%,

(bezogen auf 100 Gew.-% eingesetztes Bindemittel, berechnet als Feststoff) durch die gleiche Gewichtsmenge mindestens eines Fixierungsmittels oder mindestens eines Weichmachers ersetzt ist.

6. Mittel zum Konservieren von Holz und Holzwerkstoffen nach einem oder mehreren der Ansprüche 1 - 5, dadurch gekennzeichnet, daß das Mittel (das anwendungsfertige Mittel)

0,001 - 1 Gew.-%, vorzugsweise 0,005 - 0,2 Gew.-%,

Cyano-(4-fluoro-3-phenoxyphenyl)-methyl-3-(2,2-dichloroethenyl)-2,2-dimethylcyclopropancarboxylat und/oder (Pentafluorphenyl)-methyl))- 1R, 3R-3-(2,2-di-chlorethenyl)-2,2-dimethylcyclopropancarboxylat oder enantiomere Verbindungen desselben und

1 - 40 Gew.-%, vorzugsweise 4 - 33 Gew.-%,

(berechnet als Feststoff) mindestens eines organisch-chemischen Bindemittels und/oder Fixierungsmittels oder Weichmachers enthält und das Gewichtsverhältnis des Gesamtanteiles an organisch-chemischen Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel)

1 : 1,2 bis 1 : 99, vorzugsweise 1 : 2 bis 1 : 25,

beträgt.

7. Mittel zum Konservieren von Holz und Holzwerkstoffen nach einem oder mehreren der Ansprüche 1 - 6, dadurch gekennzeichnet, daß das anwendungsfertige Mittel

0,001 - 1 Gew.-%, vorzugsweise 0,005 - 0,2 Gew.-%,

Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-di-chlorethenyl)-2,2-dimethylcyclopropancarboxylat oder enantiomere Verbindungen desselben und

1 - 40 Gew.-%, vorzugsweise 4 - 33 Gew.-%,

mindestens eines organisch-chemischen Bindemittels und/oder Fixierungsmittels oder Weichmachers,

0 - 7 Gew.-%, vorzugsweise 0,5 - 5 Gew.-%,

eines in dem organisch-chemischen Lösungsmittel oder Lösungsmittelgemisch löslichen Fungizides oder Fungizidgemisches,

0 - 8 Gew.-%, vorzugsweise 0,1 - 4 Gew.-%,

mindestens eines wasserlöslichen und/oder wasserunlöslichen Farbstoffes, Farbpigmentes und/oder Korrosionsschutzmittels, Siccatives und/oder UV-Stabilisators und

98,999 Gew.-% - 44 Gew.-%, vorzugsweise 95,395 Gew.-% - 57,8 Gew.-%,

eines Verdünnungsmittels oder Verdünnungsmittelgemisches, bestehend aus mindestens einem organisch-chemischen Lösungsmittel oder Lösungsmittelgemisch und/oder Wasser und/oder mindestens einem Emulgator und/oder Netzmittel oder -Gemisch derselben, besteht.

8. Konzentrat zum Konservieren von Holz und Holzwerkstoffen nach einem oder mehreren der Ansprüche 1 - 6, dadurch gekennzeichnet, daß das Konzentrat

0,002 - 5 Gew.-%, vorzugsweise
0,003 - 2 Gew.-%,

Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-dichlorethenyl)-2,2-dimethylcyclopropancarboxylat oder enantiomere Verbindungen desselben und

2 - 85 Gew.-%, vorzugsweise
8 - 40 Gew.-%,

(berechnet als Feststoff) mindestens eines organisch-chemischen Bindemittels und/oder Fixierungsmittels oder Weichmachers enthält und das Gewichtsverhältnis des Gesamtanteiles an organisch-chemischem Bindemittel und/oder Fixierungsmittel oder Weichmacher zu dem Gesamtanteil des Verdünnungsmittels (einschl. Lösungsmittel oder Lösungsmittelgemisch und/oder Wasser und/oder Emulgator und/oder Netzmittel)

8,5 : 1 bis 1 : 48, vorzugsweise
1 : 1,45 bis 1 : 11,5,

beträgt.

9. Konzentrat zum Konservieren von Holz und Holzwerkstoffen nach einem oder mehreren der Ansprüche 1 - 6 und 8, dadurch gekennzeichnet, daß das Konzentrat

0,002 - 5 Gew.-%, vorzugsweise
0,003 - 2 Gew.-%,

Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-dichlorethenyl)-2,2-dimethylcyclopropancarboxylat oder enantiomere Verbindungen desselben und

2 - 85 Gew.-%, vorzugsweise
8 - 60 Gew.-%,

mindestens eines organisch-chemischen Bindemittels und/oder Fixierungsmittels oder Weichmachers,

20 - 0 Gew.-%, vorzugsweise
8 - 1 Gew.-%,

eines in dem organisch-chemischen Lösungsmittel oder Lösungsmittelgemisch löslichen Fungizides oder Fungizidgemisches und einem Verdünnungsmittel oder Verdünnungsmittelgemisch als Restbestandteil, bestehend aus mindestens einem organisch-chemischen Lösungsmittel oder Lösungsmittelgemisch oder Wasser und organisch-chemisches Lösungsmittel oder Lösungsmittelgemisch und/oder mindestens einem Emulgator und/oder Netzmittel oder einem -Gemisch derselben sowie gegebenenfalls Farbstoffen, Farbpigmenten, Korrosionsschutzmitteln, Siccativen und/oder Uv-Stabilisatoren, enthält.

## Claims

1. Agent or concentrate for preserving wood and timber materials on the basis of at least one insecticide or insecticide mixture, at least one diluent, at least one organic-chemical binding agent and/or fixing agent and also optionally at least one fungicide, processing aid and/or additive, dye, pigment, dye or pigment mixture, characterised in that the agent or concentrate contains

0.001 - 5% by weight

cyano-(4-fluoro-3-phenoxyphenyl)-methyl-3-3-(2,2-dichloroethenyl)-2,2-dimethylcyclopropane carboxylate and/or ((pentafluorophenyl)-methyl))-1R,3R-3-2,2-dichloroethenyl)-2,2-dimethylcyclopropane carboxylate [sic] or enantiomeric compounds thereof and

more than 75% by weight

of a mixture, consisting of at least one binding agent and at least one diluent and/or at least one emulsifier and/or wetting agent or mixture thereof, with the proviso that at least 1% by weight of the binding agent, which consists of at least one alkyd resin and/or a drying vegetable oil, is contained in the wood protection agent or concentrate (calculated as solid) and the weight ratio of binding agent or binding agent mixture to the diluent or diluent mixture and to the emulsifier or emulsifier mixture and/or wetting agent or wetting agent mixture contained in the agent or concentrate is

8.5 : 1 to 1 : 99.

2. Agent or concentrate according to Claim 1, characterised in that the agent or concentrate contains

more than 90% by weight

of a mixture, consisting of at least one binding agent and at least one diluent and/or at least one emulsifier and/or wetting agent or mixture thereof, with the proviso that at least 4% by weight of the binding agent, which consists of at least one alkyd resin and/or a drying vegetable oil, is contained in the wood protection agent or concentrate (calculated as solid).

3. Agent or concentrate according to Claims 1 and 2, characterised in that the diluent contains or consists of an organic-chemical solvent or solvent mixture, preferably at least one polar, organic-chemical solvent and/or an oily or oil-like, poorly volatile, organic-chemical solvent or a mixture of water and/or of at least one organic-chemical solvent, preferably at least one polar, organic-chemical solvent and/or an oily or oil-like, poorly volatile, organic-chemical solvent or solvent mixture, and at least one emulsifier and/or wetting agent.

4. Agent or concentrate according to one or more of Claims 1 - 3, characterised in that the organic-chemical binding agent or binding agent mixture is replaced entirely, preferably partially by at least one fixing agent or at least one softener.

5. Agent or concentrate according to one or more of Claims 1 - 4, characterised in that

from 0 to 75% by weight, preferably
from 0.01 to 35% by weight,

(relative to 100% by weight of binding agent used, calculated as solid) of the organic-chemical binding agent or binding agent mixture is replaced by the same amount by weight of at least one fixing agent or at least one softener.

6. Agent for preserving wood and timber materials according to one or more of Claims 1 - 5, characterised in that the agent (the agent ready for use) contains

0.001 - 1% by weight, preferably
0.005 - 0.2% by weight,

cyano-(4-fluoro-3-phenoxyphenyl)-methyl-3-(2,2-dichloroethenyl)-2,2-dimethylcyclopropane carboxylate and/or (pentafluorophenyl)-methyl-)-1R,3R-3-(2,2-dichloroethenyl)-2,2-dimethylcyclopropane carboxylate [sic] or enantiomeric compounds thereof and

1 - 40% by weight, preferably
4 - 33% by weight,

(calculated as solid) of at least one organic-chemical binding agent and/or fixing agent or softener, and the weight ratio of the total content of organic-chemical binding agent and/or fixing agent or softener to the total content of the diluent (incl. solvent or solvent mixture and/or water and/or emulsifier and/or wetting agent) is 1 : 1.2 to 1 : 99, preferably 1 : 2 to 1 : 25.

7. Agent for preserving wood and timber materials according to one or more of Claims 1 - 6, characterised in that the agent ready for use contains

0.001 - 1% by weight, preferably
0.005 - 0.2% by weight,

cyano-(4-fluoro-3-phenoxyphenyl)-methyl-3-(2,2-dichloroethenyl)-2,2-dimethylcyclopropane carboxylate and/or ((pentafluorophenyl)-methyl))-1R,3R-3-(2,2-dichloroethenyl)-2,2-dimethylcyclopropane carboxylate [sic] or enantiomeric compounds thereof and

1 - 40% by weight, preferably
4 - 33% by weight,

of at least one organic-chemical binding agent and/or fixing agent or softener,

0 - 7% by weight, preferably
0.5 - 5% by weight,

of a fungicide or fungicide mixture soluble in the organic-chemical solvent or solvent mixture,

0 - 8% by weight, preferably
0.1 - 4% by weight,

of at least one water-soluble and/or water-insoluble dye, colour pigment and/or corrosion protection agent, siccative and/or UV-stabiliser and 98.999% by weight - 44% by weight, preferably
95.395% by weight - 57.8% by weight,

of a diluent or diluent mixture, consisting of at least one organic-chemical solvent or solvent mixture and/or water and/or at least one emulsifier and/or wetting agent or mixture thereof.

8. Concentrate for preserving wood and timber materials according to one or more of Claims 1 - 6, characterised in that the concentrate contains

0.002 - 5% by weight, preferably
0.003 - 2% by weight,

cyano-(4-fluoro-3-phenoxyphenyl)-methyl-3-(2,2-dichloroethenyl)-2,2-dimethylcyclopropane carboxylate and/or ((pentafluorophenyl)-methyl))-1R,3R-3-(2,2-dichloroethenyl)-2,2-dimethylcyclopropane carboxylate [sic] or enantiomeric compounds thereof and

2 - 85% by weight, preferably
8 - 40% by weight,

(calculated as solid) of at least one organic-chemical binding agent and/or fixing agent or softener, and the weight ratio of the total content of organic-chemical binding agent and/or fixing agent or softener to the total content of the diluent (incl. solvent or solvent mixture and/or water and/or emulsifier and/or wetting agent) is

8.5 : 1 to 1 : 48, preferably
1 : 1.45 to 1 : 11.5.

9. Concentrate for preserving wood and timber materials according to one or more of Claims 1 - 6 and 8, characterised in that the concentrate contains

0.002 - 5% by weight, preferably
0.003 - 2% by weight,

cyano-(4-fluoro-3-phenoxyphenyl)-methyl-3-(2,2-dichloroethenyl)-2,2-dimethylcyclopropane carboxylate and/or ((pentafluorophenyl)-methyl))-1R,3R-3-(2,2-dichloroethenyl)-2,2-dimethylcyclopropane carboxylate [sic] or enantiomeric compounds thereof and

2 - 85% by weight, preferably
8 - 60% by weight,

of at least one organic-chemical binding agent and/or fixing agent or softener,

20 - 0% by weight, preferably

8 - 1% by weight,

of a fungicide or fungicide mixture soluble in the organic-chemical solvent or solvent mixture and a diluent or diluent mixture as the remaining constituent, consisting of at least one organic-chemical solvent or solvent mixture or water and organic-chemical solvent or solvent mixture and/or at least one emulsifier and/or wetting agent or a mixture thereof, and also optionally dyes, colour pigments, corrosion protection agents, siccatives and/or UV-stabilisers.

**Revendications**

1. Agent ou concentré pour la conservation du bois et de matériaux contenant du bois à base d'au moins un insecticide ou un mélange d'insecticides, d'au moins un diluant, d'au moins un agent liant organo-chimique et/ou d'un agent de fixation ainsi que, le cas échéant, d'au moins un fongicide, d'un agent d'ouvrabilité et/ou d'un adjuvant, d'un colorant, d'un pigment, d'un mélange de colorants ou de pigments, caractérisé en ce que l'agent ou le concentré contient
0,001 - 5 % en poids
de 2,2-diméthylcyclopropanecarboxylate de cyano-(4-fluoro-3-phénoxyphényl)-méthyl-3-3-(2,2-dichloroéthényle) et/ou de 2,2-diméthylcyclopropanecarboxylate de ((pentafluorophényl)-méthyl))-1R,3R-3-(2,2-dichloroéthényle) ou d'un de leurs énantiomères et
plus de 75 % en poids
d'un mélange constitué par au moins un agent liant et au moins un diluant et/ou au moins un émulsifiant et/ou agent mouillant ou un mélange de ceux-ci, à la condition que la proportion d'agent liant, Constitué par au moins une résine alkyde et/ou une huile végétale siccative, contenu dans l'agent de protection du bois ou dans le concentré (calculé sous forme de substance solide) soit égale à au moins 1 % en poids et que le rapport en poids entre l'agent liant ou le mélange d'agents liants et le diluant ou le mélange de diluants et l'émulsifiant ou le mélange d'émulsifiants et/ou l'agent mouillant ou le mélange d'agents mouillants contenu dans l'agent ou le concentré soit compris entre
8,5 : 1 et 1 : 99.

2. Agent ou concentré selon la revendication 1, caractérisé en ce que l'agent ou le concentré contient
plus de 90 % en poids
d'un mélange constitué par au moins un agent liant et au moins un diluant et/ou au moins un émulsifiant et/ou agent mouillant ou un mélange de ceux-ci, à la condition que la proportion d'agent liant, constitué par au moins une résine alkyde et/ou une huile végétale siccative, contenu dans l'agent de protection du bois ou dans le concentré (calculé sous forme de substance solide) soit égale à au moins 4 % en poids.

3. Agent ou concentré selon les revendications 1 et 2, caractérisé en ce que le diluant contient ou est constitué par un solvant ou un mélange de solvants organo-chimique, de préférence un solvant organo-chimique polaire et/ou un solvant organo-chimique, huileux ou oléagineux, peu volatil, ou un mélange d'eau et/ou au moins un solvant organo-chimique, de préférence un solvant organo-chimique polaire et/ou un solvant ou un mélange de solvants organo-chimique, huileux ou oléagineux, peu volatil, et au moins un émulsifiant et/ou agent mouillant.

4. Agent ou concentré selon une ou plusieurs des revendications 1 à 3, caractérisé en ce que l'agent liant ou le mélange d'agents liants est remplacé totalement, de préférence partiellement, par un moins un agent de fixation ou au moins un plastifiant.

5. Agent ou concentré selon une ou plusieurs des revendications 1 à 4, caractérisé en ce que 0 à 75 % en poids, de préférence 0,01 à 35 % en poids (par rapport à 100 % en poids de l'agent liant utilisé, calculé sous forme de substance solide) de l'agent liant ou du mélange d'agents liants organo-chimique sont remplacés par les mêmes quantités en poids d'au moins un agent de fixation ou d'au moins un plastifiant.

6. Agent pour la conservation du bois et de matériaux contenant du bois selon une ou plusieurs des revendications 1 à 5, caractérisé en ce que l'agent (l'agent prêt à l'emploi) contient 0,001 à 1 % en poids, de préférence 0,005 à 0,2 % en poids, de 2,2-diméthylcyclopropanecarboxylate de cyano-(4-fluoro-3-phénoxyphényl)-méthyl-3-(2,2-dichloroéthényle) et/ou de 2,2-diméthylcyclopropanecarboxylate de ((pentafluorophényl)-méthyl))-1R,3R-3-(2,2-dichloroéthényle) ou des composés énantiomères de ceux-ce et 1 à 40 % en poids, de préférence 4 à 33 % en poids (calculé sous forme de substance solide), d'au moins un agent liant et/ou agent de fixation ou plastifiant organo-chimique, le rapport en poids entre la proportion totale d'agent liant et/ou d'agent de fixation ou de plastifiant organo-chimique et la proportion totale de diluant (y compris le solvant ou le mélange de solvants et/ou l'eau et/ou l'émulsifiant et/ou l'agent mouillant) est compris entre 1 : 1,2 et 1 : 99, de préférence entre 1 : 2 et 1 : 25.

7. Agent pour la conservation du bois et de matériaux contenant du bois selon une ou plusieurs des revendications 1 à 6, caractérisé en ce que l'agent prêt à l'emploi est constitué par 0,001 à 1 % en poids, de préférence par 0,005 à 0,2 % en poids, de 2,2-diméthylcyclopropanecarboxylate de cyano-(4-fluoro-3-phénoxyphényl)-méthyl-3-(2,2-dichloroéthényle) et/ou de 2,2-diméthylcyclopropanecarboxylate de ((pentafluorophényl)-méthyl))-1R,3R-3-(2,2-dichloroéthényle) ou des composés énantiomères de ceux-ci et par 1 à 40 % en poids, de préférence par 4 à 33 % en poids, d'au moins un agent liant et/ou agent de fixation ou plastifiant organo-chimique, par 0 à 7 % en poids, de préférence par 0,5 à 5 % en poids, d'un fongicide ou d'un mélange de fongicides soluble dans le solvant ou dans le mélange de solvants organo-chimique, par 0 à 8 % en poids, de préférence par 0,1 à 4 % en poids, d'au moins un colorant, pigment colorant et/ou agent de protection contre la corrosion, siccatif et/ou agent de stabilisation contre les rayons UV soluble et/ou insoluble dans l'eau et par 98,999 à 44 % en poids, de préférence par 95,395 à 57,8 % en poids, d'un diluant ou d'un mélange de diluants, constitué par au moins un solvant ou un mélange de solvants organo-chimique et/ou de l'eau et/ou par au moins un émulsifiant et/ou agent mouillant ou un mélange de ceux-ci.

8. Concentré pour la conservation du bois et de matériaux à base de bois selon une ou plusieurs revendications 1 à 6, caractérisé en ce que le concentré contient 0,002 à 5 % en poids, de préférence 0,003 à 2 % en poids, de 2,2-diméthylcyclopropanecarboxylate de cyano-(4-fluoro-3-phénoxyphényl)-méthyl-3-(2,2-dichloroéthényle) et/ou de 2,2-diméthylcyclopropanecarboxylate de ((pentafluorophényl)-méthyl))-1R,3R-3-(2,2-dichloroéthényle) ou de composés énantiomères de ceux-ci et 2 à 85 % en poids, de préférence 8 à 40 % en poids

(calculé sous forme de substance solide), d'au moins un agent liant et/ou agent de fixation ou plastifiant organo-chimique, le rapport en poids entre la proportion totale d'agent liant et/ou agent de fixation ou plastifiant organo-chimique et la proportion totale de diluant (y compris le solvant ou le mélange de solvants et/ou l'eau et/ou l'émulsifiant et/ou l'agent mouillant) étant compris entre
8,5 : 1 et 1 : 48, de préférence entre
1 : 1,45 et 1 : 11,5.

9. Concentré pour la conservation du bois et de matériaux à base de bois selon une ou plusieurs revendications 1 à 6 et 8, caractérisé en ce que le concentré contient
0,002 à 5 % en poids, de préférence
0,003 à 2 % en poids,
de 2,2-diméthylcyclopropanecarboxylate de cyano-(4-fluoro-3-phénoxyphényl)-méthyl-3-(2,2-dichloroéthényle) et/ou de 2,2-diméthylcyclopropanecarboxylate de ((pentafluorophényl)-méthyl))-1R,3R-3-(2,2-dichloroéthényle) ou de composés énantiomères de ceux-ci et 2 à 85 % en poids, de préférence
8 à 60 % en poids,
d'au moins un agent liant et/ou agent de fixation ou plastifiant organo-chimique,
20 à 0 % en poids, de préférence
8 à 1 % en poids,
d'un fongicide ou d'un mélange de fongicides soluble dans le solvant ou dans le mélange de solvants organo-chimique et un diluant ou un mélange de diluants comme constituant complémentaire, constitué par au moins un solvant ou mélange de solvants organo-chimique et/ou par de l'eau et/ou au moins un émulsifiant et/ou agent mouillant ou un mélange de ceux-ci, ainsi que, le cas échéant, des colorants, des pigments colorants, des agents de protection contre la corrosion, des siccatifs et/ou des agents de stabilisation contre les rayons UV.

Versuch Nr. 1

% Abtötung

Stunden Kontaktzeit

Versuch Nr. 2

*Versuch Nr. 3*